# EUROPEAN PATENT APPLICATION

(11) **EP 4 279 348 A1**
(43) Date of publication of application: **22.11.2023**
(21) Application number: 22173985.7
(22) Date of filing: 18.05.2022
(51) Int. Cl.: B60T 17/08, F16D 65/28

(54) **SPRING BRAKE ACTUATOR COMPRISING A HOUSING BOTTOM WITH AN EMBOSSING FOR A COMPRESSION SPRING, AND COMMERCIAL VEHICLE COMPRISING A RESPECTIVE SPRING BRAKE ACTUATOR**

(71) Applicant: ZF CV Systems Europe BV, 1170 Brüssel (BE)
(72) Inventor: STRZALA, Wieslaw, 46-220 Byczyna (PL)
(74) Representative: Ohlendorf, Henrike

(57) **Abstract**

A spring brake actuator comprises a housing with a housing base (70), a first housing cover, and a second housing cover (72) with a housing bottom (74), wherein within the housing base and the first housing cover a diaphragm, a service chamber, a service spring chamber, and a service brake spring are disposed for providing a service brake function. Within the housing base and the second housing cover a compression spring (82) and a ram assembly (78, 86) are disposed for providing a parking brake function. The ram assembly separates a parking spring chamber (80), in which the compression spring is disposed, from a parking chamber (84). The compression spring comprises a first end (94) and a second end (96), wherein the first end (94) rests at the ram assembly. The housing bottom comprises an embossing (106) directed to an outside (108) of the housing bottom for the second end (96) of the compression spring (82).

## Description

The invention relates to a spring brake actuator providing a service brake function and a parking brake function, and to a commercial vehicle comprising a respective spring brake actuator.

Spring brake actuators are widely used in compressed air brake systems of large vehicles, for example of commercial vehicles like heavy trucks, buses and trailers. A spring brake actuator is operated using compressed air provided by a compressed-air supply container, which is filled by a compressor. The spring brake actuator comprises a service chamber and a parking chamber and at least one diaphragm, which moves a push rod to operate a disc brake or a drum brake of the vehicle when the service chamber is filled with compressed air during a braking action initiated by a respective driver of the vehicle.

The spring brake actuator comprises a service brake part and a parking brake part. The service brake part comprises a first housing cover, the diaphragm, the service chamber, and the push rod for providing the service brake function. The parking brake part comprises a second housing cover, a ram assembly, the parking chamber, and a heavy compression spring for providing the parking brake function and an emergency brake function. The service brake part and the parking brake part are conjoined by a housing base.

A spring brake actuator 1 according to the preamble of claim 1, as disclosed for example by CN 106068213 corresponding with WO 2015/172862 A1, is schematically depicted in a cross-sectional view in Fig. 1. The spring brake actuator 1 comprises a housing with a housing base 2, a first cylindrical housing cover 4, and a second cylindrical housing cover 6. Within the housing base 2 and the first housing cover 4 a diaphragm 8, a service chamber 10, a service spring chamber 12, in which a service brake spring 14 is arranged, a push rod 16, and a push rod plate 18 are disposed. The diaphragm 8 separates the service chamber 10 from the service spring chamber 12, and the diaphragm 8 is enabled to shift the push rod 16 via the push rod plate 18 for providing a braking action. The spring brake actuator 1 further comprises a compressed air inlet 20 for operating the spring brake actuator 1.

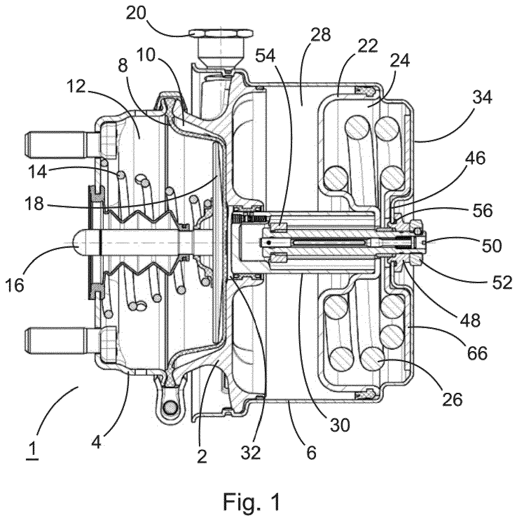

The push rod 16 is coupled, for example, with a disc brake, not shown in Fig. 1, and in case the service chamber 10 is filled with compressed air, the diaphragm 8 shifts the push rod 16 via the push rod plate 18, which actuates the disc brake and also compresses the service brake spring 14. When the compressed air is released from the service chamber 10, the service brake spring 14 pushes the diaphragm 8 back, which releases the disc brake.

Within the housing base 2 and the second housing cover 6 a ram assembly with a spring brake piston 22 is provided. The spring brake piston 22 separates a parking spring chamber 24, in which a compression spring 26 is disposed, from a parking chamber 28. The compression spring 26 acts on the spring brake piston 22 and tries to push the spring brake piston 22 in the direction of the housing base 2, if compressed. When the parking chamber 28 is filled with compressed air, the spring brake piston 22 is moved in the direction of the compression spring 26, compressing the compression spring 26. When the compressed air is released from the parking chamber 28, the compression spring 26 shifts the spring brake piston 22 in the direction of the housing base 2.

The ram assembly further comprises a spring brake bolt 30 that is connected with the spring brake piston 22. When the compression spring 26 shifts spring brake piston 22, the spring brake bolt 30 is moved by the spring brake piston 22 through a hole 32 of the housing base 2 in the direction of the diaphragm 8, which results in a movement of the diaphragm 8 and the push rod plate 18 in the direction of the service brake spring 14, providing a braking action via the push rod 16.

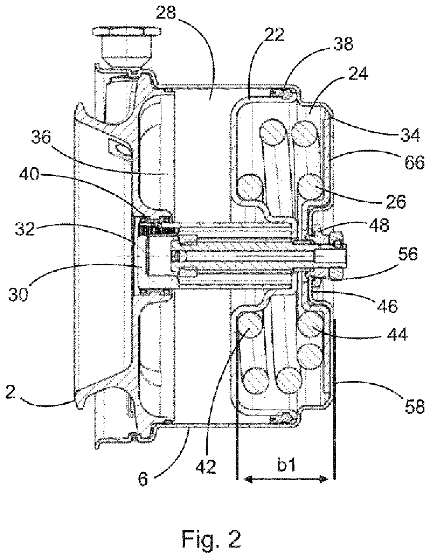

The parking brake part of the spring brake actuator 1 is depicted in more detail in Fig. 2 in a cross section. The second housing cover 6 has a cylindrical form like a pot with a housing bottom 34 and an open side 36 directed towards the housing base 2, wherein the spring brake piston 22 is movably arranged within the second housing cover 6. A sealing 38 is arranged at an outer circumference of the spring brake piston 22, so that the parking spring chamber 24 is sealed against the parking chamber 28. A further sealing 40 is disposed in the hole 32 of the housing base 2, between the spring brake bolt 30 and the housing base 2, which seals the parking chamber 28 against the service chamber 10.

The compression spring 26 is in particular a compressible cylindrical power spring and rests with a first end 42 at the spring brake piston 22 and with a second end 44 at a spring seat 66 provided at the housing bottom 34 of the second housing cover 6. The housing bottom 34 comprises a sinking 46 in the centre of the housing bottom 34 directed towards the spring brake piston 22. In this sinking 46 a boss 48 is mounted. The boss 48 is disposed for guiding a release mechanism with a release bolt 50, a static nut 52 and a running nut 54, as depicted in Fig. 1. The release bolt 50 extends from the outside of the spring brake actuator 1 through a central hole 56 of the sinking 46 and the boss 48 into a cavity of the spring brake piston 22. The release mechanism can be used by a person to unlock the parking brake function of the spring brake actuator 1 in case of an emergency, for example when the engine of the vehicle is broken and no compressed air is available for unlocking the parking brake function of the spring brake actuator 1.

Figs. 1 and 2 show the spring brake actuator 1 in a driving condition of the vehicle, in which the parking chamber 28 is filled with compressed air and the compression spring 26 is fully compressed. A length b1 denotes in this state a length including the compressed compression spring 26 and the housing bottom 34, from an outer end 58 of the second housing cover 6 to the first end 42 of the compression spring 26.

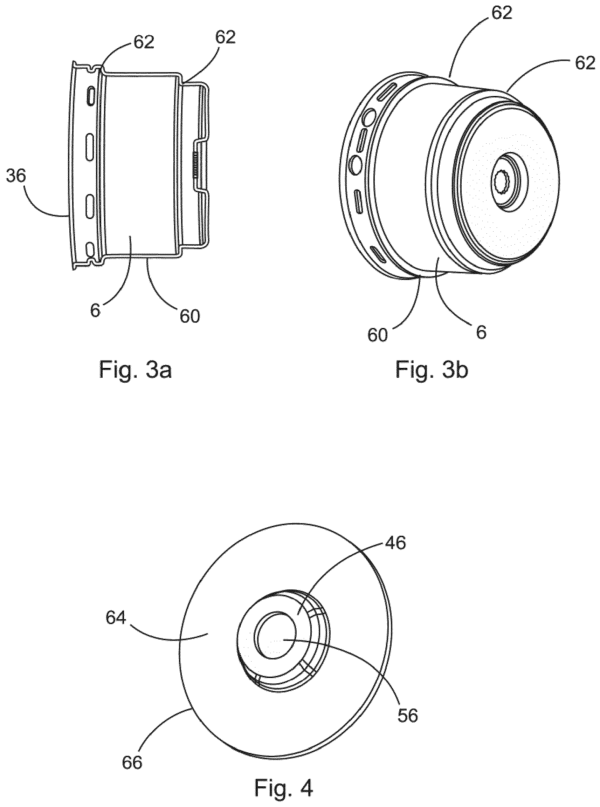

The second housing cover 6 is depicted in Figs. 3a and 3b in a in a cross section view and a side view. The second housing cover 6 comprises a cylindrical housing wall 60, which has different diameters in this embodiment, creating steps 62 at the housing wall 60. With its open side 36, the second housing cover 6 is mounted at the housing base 2.

Fig. 4 depicts the spring seat 66, as included within the second housing cover 6, with the sinking 46. The compression spring 26 rests with its second end 44 at the spring seat 66. The spring seat 66 comprises a flat surface 64, a spring seat surface, which accommodates the second end 44 of the compression spring 26 when the compression spring 26 is in the compressed state as well as in the uncompressed state. Correspondingly, the housing bottom 34 is flat at its outside as well at its inside, except of the sinking 46. The flat surface 64 of the housing bottom 34 is sufficiently large to accommodate the second end 44 of the compression spring 26 when the compression spring 26 is in the compressed state as well as in the uncompressed state. The spring seat 66 has the function of a reinforcing plate for the compression spring 26.

GB 2064651 A, GB 1508171 A, WO 2014/168419 A1 and WO 97/07322 A1 disclose further prior art spring brake actuators comprising a service brake part and a parking brake part.

It is an object of the present invention to provide a spring brake actuator with a reduced outline to fit into applications with a reduced installation space.

The invention is as set out in the independent claims 1 and 14. Preferred embodiments are defined by the dependent claims.

The spring brake actuator comprises a housing with a housing base, a first housing cover and a second housing cover with housing bottom, wherein within the housing base and the first housing cover a diaphragm, a service chamber, a service spring chamber, and a service brake spring are disposed for providing a service brake function, and within the housing base and the second housing cover a compression spring and a ram assembly are disposed for providing a parking brake function. The ram assembly separates a parking spring chamber, in which the compression spring is disposed, from a parking chamber. The compression spring comprises a first end and a second end, wherein the first end rests at the ram assembly, and wherein the housing bottom comprises an embossing directed to an outside of the housing bottom for the second end of the compression spring.

In a preferred embodiment, the housing bottom comprises a flat surface, on which the embossing is manufactured.

In another preferred embodiment, the housing bottom comprises a sinking being directed towards the housing base, wherein the embossing surrounds the sinking.

In another preferred embodiment, the sinking comprises a central hole.

In another preferred embodiment, the embossing surrounds the sinking by at least 360°.

In another preferred embodiment, the embossing matches a shape of the second end of the compression spring, when the compression spring is in a compressed state.

In another preferred embodiment, the embossing has a form of a spiral corresponding with the second end of the compression spring, when the compression spring is in a compressed state.

In another preferred embodiment, the embossing matches a shape of a spring section being in contact with a spring seat surface of the compression spring in a compressed state.

In another preferred embodiment, the embossing includes a smaller part and a larger part and comprises an area having a size being sufficient to include an outer contour of the second end, when the compression spring is in a compressed state.

In another preferred embodiment, the embossing has a form of a trench, wherein the smaller part has a smaller width with regard to a width of the larger part.

In another preferred embodiment, the spring brake actuator comprises a spring seat disposed at the housing bottom, wherein the spring seat comprises an embossing corresponding with the embossing of the housing bottom.

In another preferred embodiment, the compression spring rests with the second end at the embossing of the spring seat.

In another preferred embodiment, the ram assembly comprises a spring brake piston or a second diaphragm.

In another preferred embodiment, the spring brake actuator is a component of a compressed air brake system of a commercial vehicle.

The spring brake actuator has the advantage of a reduced horizontal length with regard to a prior art spring brake actuator, when the spring brake actuator is mounted with an angled position at a vehicle. With the reduced horizontal length, the spring brake actuator is better suited to fit into a limited installation space of a vehicle.

The invention further defines a commercial vehicle comprising a respective spring brake actuator.

Preferred embodiments of the disclosure are explained in more detail below by way of example with reference to schematic drawings, which show:
Fig. 1 a spring brake actuator according to prior art in a cross section;
Fig. 2 a parking brake part of the spring brake actuator of Fig. 1 in a cross section;
Figs. 3a, 3b a second housing cover of the spring brake actuator of Fig. 1 in a cross section view and a side view;
Fig 4 a spring seat as included within the second housing cover of Figs. 3a, 3b in a bottom view;
Fig. 5 a parking brake part of a spring brake actuator according to the invention in a cross section;
Figs. 6a, 6b an outside view and an inside view of a second housing cover of the parking brake part of Fig. 5;
Figs. 7a, 7b a spring seat as included within the second housing cover of Figs. 6a, 6b in a bottom view and in a top view;
Fig. 8 a view of the second housing cover of Fig. 6a demonstrating a reduced size of the spring brake actuator of Fig. 5 in a cross section;
Figs. 9a, 9b an outside view and an inside view of an alternative embodiment of the second housing cover of the parking brake part of Fig. 5; and
Figs. 10a, 10b a spring seat as included within the second housing cover of Figs. 9a, 9b in a top view and in a bottom view.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for instructional purposes to aid the reader in understanding the principles of the disclosure and the concepts contributed by the inventors to furthering the art, and are to be construed as being without limitation to such specifically recited examples and conditions. Moreover, all statements herein reciting principles, aspects, and embodiments of the disclosure, as well as specific examples thereof, are intended to encompass both structural and functional equivalents thereof.

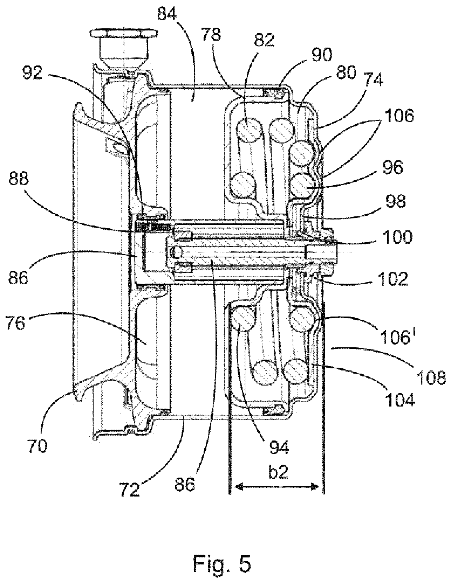

Fig. 5 depicts a parking brake part of a spring brake actuator comprising a housing base 70 and a second housing cover 72 according to the invention, in a cross section. The second housing cover 72 has a cylindrical form like a pot with a housing bottom 74 and with an open side 76 directed towards the housing base 70. Within the housing base 70 and the second housing cover 72, a ram assembly with a spring brake piston 78 is provided. The spring brake piston 78 separates a parking spring chamber 80, in which a compression spring 82 is disposed, from a parking chamber 84. The compression spring 82 acts on the spring brake piston 78 and tries to push the spring brake piston 78 in the direction of the housing base 70, if compressed. When the parking chamber 84 is filled with compressed air, the spring brake piston 78 is moved in the direction of the compression spring 82, compressing the compression spring 82. When the compressed air is released from the parking chamber 84, the compression spring 82 shifts the spring brake piston 78 in the direction of the housing base 70.

The spring brake actuator comprises in a preferred embodiment a service brake part, not shown in Fig. 5, for example as described with regard to Figs. 1 and 2. The service brake part comprises in particular a diaphragm, a service chamber, a service spring chamber, in which a service brake spring is disposed, a push rod, and a push rod plate. The diaphragm separates the service chamber from the service spring chamber: The diaphragm is enabled to shift the push rod via the push rod plate for providing a braking action.

The ram assembly, Fig. 5, further comprises a spring brake bolt 86 coupled with the spring brake piston 78. When the compression spring 82 shifts the spring brake piston 78, the spring brake bolt 86 is moved by the spring brake piston 78 through a hole 88 of the housing base 70 in the direction of the diaphragm of the service brake part, which results in a movement of the push rod of the service brake part, providing a braking action.

A sealing 90 is arranged at an outer circumference of the spring brake piston 78, so that the parking spring chamber 80 is sealed against the parking chamber 84. A further sealing 92 seals the parking chamber 84 against the service chamber of the service brake part.

The compression spring 82 is in particular a compressible cylindrical power spring and rests with a first end 94 at the spring brake piston 78 and with a second end 96 at the housing bottom 74 of the second housing cover 72. The housing bottom 74 comprises a sinking 98 in the centre of the housing bottom 74, which sinking 98 is directed towards the housing base 70. The sinking 98 comprises in its centre a central hole 100, in which a boss 102 is mounted. The boss 102 is provided for guiding a release mechanism with a release bolt, as described with regard to Figs. 1 and 2. The release mechanism can be used by a person to unlock the parking brake function of the spring brake actuator in case of an emergency.

The housing bottom 74 includes in this embodiment a spring seat 104 covering the surface of the housing bottom 74 as well as the sinking 98, with exception of the central hole 100. The housing bottom 74 comprises a trenchlike embossing 106 and the spring seat 104 comprises a trenchlike embossing 106', both embossings 106, 106' being in the direction of an outside 108 of the housing bottom 74, wherein at the embossing 106' the second end 96 of the compression spring 82 is disposed. The embossing 106' represents a spring seat surface for the compression spring 82 and has a size sufficient to accommodate the second end 96 of the compression spring 82 in the uncompressed state as well as in the compressed state of the compression spring 82.

The spring brake actuator is usable advantageously for a large vehicle, for example for a commercial vehicle, and operates particularly as described with regard to the spring brake actuator 1 of Figs. 1 and 2.

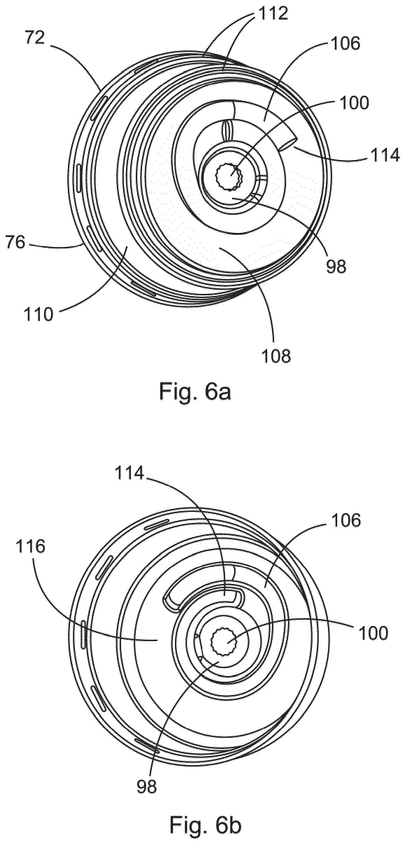

The second housing cover 72 is depicted in a side view in Fig. 6a. The second housing cover 72 comprises a cylindrical housing wall 110 which has different diameters in this embodiment, creating steps 112 at the housing wall 110. With its open side 76, the second housing cover 72 is mounted at the housing base 70. The embossing 106 surrounds the central hole 100 of the sinking 98 in this embodiment by more than 360° and has a form of a spiral corresponding with the form of the compression spring 82. The embossing 106 and the embossing 106', Fig. 5, have in particular a width corresponding with a diameter of the compression spring 82, so that the second end 96 of the compression spring 82 in its compressed state is at least partly accommodated in the embossing 106', with regard to the diameter of the compression spring 82. The embossing 106 surrounds the central hole 100 clockwise, with regard to a beginning 114 of the embossing 106, as viewed from an outside 108 of the housing bottom 74. In an alternative embodiment, an embossing corresponding with the embossing 106 surrounds the central hole 100 counterclockwise.

Fig. 6b depicts the second housing cover 72 in an opposite view, showing an inside 116 of the second housing cover 72.

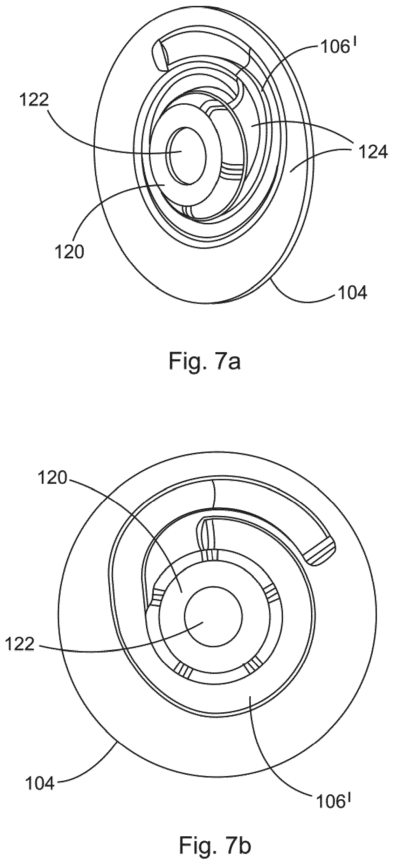

Fig. 7a depicts the spring seat 104 as included within the second housing cover 72, Fig. 5, in a bottom view. The spring seat 104 comprises a sinking 120 with a central hole 122 and an outer part 124, in which the embossing 106' is realized. The compression spring 82 rests with its second end 96 at the embossing 106', which corresponds with the embossing 106 of the housing bottom 74.

The embossing 106' of the spring seat 104 is sufficiently large to accommodate the second end 96 of the compression spring 82 when the compression spring 82 is the compressed state as well as in the uncompressed state.

Fig. 7b depicts the spring seat 74 of Fig. 7a with the sinking 98 from an opposite side. In this view, the embossing 106' surrounds the hole 100 clockwise, as shown in Fig. 6a.

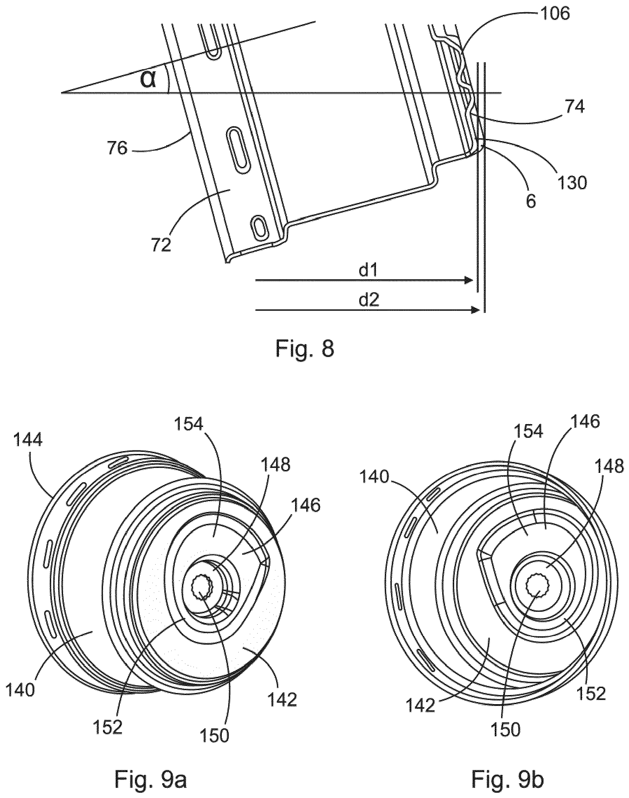

Fig. 8 shows a contour of the second housing cover 72 without the spring seat 104, together with a contour of the second housing cover 6 of the spring brake actuator 1. The embossing 106 in the housing bottom 74 of the second housing cover 72, and the corresponding embossing 106' of the spring seat 104, allow shifting an outer end 130 of the housing bottom 74, which is not concerned by the embossing 106 of the housing bottom 74, towards the open side 76 of the second housing cover 72. When the spring brake actuator is mounted with the second housing cover 72 at an angled position at a vehicle, with an angle α as shown in Fig. 8, there exists a reduced horizontal length d1 <d2 of the spring brake actuator with regard to the second housing cover 6 of the spring brake actuator 1, wherein d2 is a horizontal length of the spring brake actuator 1 when the spring brake actuator 1 is mounted under the same angle α. With the reduced horizontal length d1, the spring brake actuator is better suited to fit into a limited installation space of a vehicle.

Under same conditions, the length b2 of the compression spring 82 in its compressed state, as shown in Fig. 5, is the same as the length b1 of the compression spring 26 of the spring brake actuator 1 in its compressed state, as shown in Fig. 2, so there is no impact of the spring brake actuator characteristics of the spring brake actuator according to Fig. 5 with regard to the spring brake actuator characteristics of the spring brake actuator 1 according to Figs. 1 and 2.

Fig. 9a depicts another preferred embodiment of a second housing cover 140 in a side view. The second housing cover 140 has a cylindrical form like a pot with a housing bottom 142 and an open side 144 being directed towards the housing base 70. The housing bottom 142 comprises an embossing 146, which is directed to an outside of the second housing cover 140. The embossing 146 surrounds a sinking 148 included in the housing bottom 142 by 360°, which sinking 148 is directed to an inside of the second housing cover 140, wherein the sinking 148 comprises a central hole 150.

The embossing 146 comprises a smaller part 152 and a larger part 154 and includes a section corresponding with a spring seat surface for the compression spring 82, which is sufficiently large to accommodate an outer contour of the spring seat of the compression spring 82 in its compressed state. The parts 152 and 154 are particularly designed such as to accommodate the second end 96 of the compression spring 82, when the compression spring 82 spirals clockwise, when viewed from an outside of the second housing cover 140. The embossing 146 has a form of a trench, wherein the smaller part 152 has a smaller width with regard to a width of the larger part 154.

Fig. 9b depicts the second housing cover 140 of Fig. 9a in an opposite view, showing an inside of the second housing cover 140.

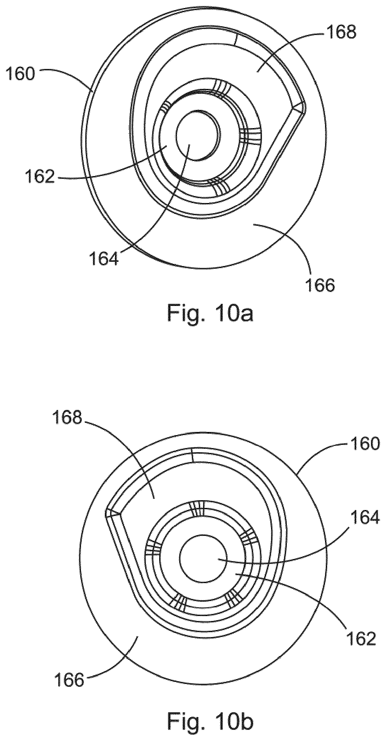

Fig. 10a depicts a spring seat 160 to be included within the second housing cover 140 of Fig. 9a, as viewed from the housing bottom 142. Fig. 10b depicts the spring seat 160 of Fig. 10a in an opposite view, from the open side 144 of the second housing cover 140. The spring seat 160 comprises a sinking 162 with a central hole 164 and an outer part 166 having a flat surface, in which an embossing 168 corresponding with the embossing 146 of second housing cover 140 is realized. The embossing 168 represents a spring seat surface for the compression spring 82 and is sufficiently large to accommodate the second end 96 of the compression spring 82, when the compression spring 82 is the compressed state as well as in the uncompressed state.

Also other embodiments may be utilized by one skilled in the art without departing from the scope of the present disclosure. The disclosure resides therefore in the claims herein after appended.

### List of Reference signs (part of the specification):

- 1: spring brake actuator
- 2: housing base
- 4: first housing cover
- 6: second housing cover
- 8: diaphragm
- 10: service chamber
- 12: service spring chamber
- 14: service brake spring
- 16: push rod
- 18: push rod plate
- 20: compressed air inlet
- 22: spring brake piston
- 24: parking spring chamber
- 26: compression spring
- 28: parking chamber
- 30: spring brake bolt
- 32: hole of the housing base 2
- 34: housing bottom
- 36: open side of second housing cover 6
- 38,40: sealings
- 42, 44: ends of the compression spring 26
- 46: sinking
- 48: boss
- 50: release bolt
- 52: static nut
- 54: running nut
- 56: central hole
- 58: outer end of the second housing cover 6
- 60: housing wall
- 62: steps
- 64: flat surface of the housing bottom 34
- 66: spring seat
- 70: housing base
- 72: second housing cover
- 74: housing bottom
- 76: open side of the second housing cover 72
- 78: spring brake piston
- 80: parking spring chamber
- 82: compression spring
- 84: parking chamber
- 86: spring brake bolt
- 88: hole of the housing base 70
- 90, 92: sealings
- 94, 96: ends of the compression spring
- 98: sinking
- 100: central hole
- 102: boss
- 104: spring seat
- 106,106': embossings
- 108: outside of housing bottom 74
- 110: housing wall
- 112: steps
- 114: beginning of the embossing 106
- 116: inside of the second housing cover 72
- 120: sinking
- 122: central hole
- 124: outer part of the spring seat 104
- 130: outer end of the housing bottom 74
- 140: second housing cover
- 142: housing bottom of the second housing cover 140
- 144: open side of the second housing cover 140
- 146: embossing
- 148: sinking
- 150: central hole
- 152, 154: parts of the embossing 146
- 160: spring seat
- 162: sinking
- 164: central hole
- 166: outer part of the spring seat 160
- 168: embossing

## Claims

1. A spring brake actuator comprising a housing with a housing base (70), a first housing cover, and a second housing cover (72, 140) with a housing bottom (74, 142), wherein
within the housing base (70) and the first housing cover a diaphragm, a service chamber, a service spring chamber, and a service brake spring are disposed for providing a service brake function;
within the housing base (70) and the second housing cover (72, 140) a compression spring (82) and a ram assembly (78, 86) are disposed for providing a parking brake function, the ram assembly (78, 86) separating a parking spring chamber (80), in which the compression spring (82) is disposed, from a parking chamber (84);
the compression spring (82) comprises a first end (94) and a second end (96), wherein the first end (94) rests at the ram assembly; **characterized in that**
the housing bottom (74, 142) comprises an embossing (106, 146) directed to an outside (108) of the housing bottom (74, 142) for the second end (96) of the compression spring (82).

2. The spring brake actuator (1) of claim 1, wherein the housing bottom (74, 142) comprises a flat surface (126, 180), on which the embossing (106, 146) is manufactured.

3. The spring brake actuator (1) of claim 1 or 2, wherein the housing bottom (74, 142) comprises a sinking (98, 148) directed towards the housing base (70), wherein the embossing (106, 146) surrounds the sinking (98, 148).

4. The spring brake actuator (1) of claim 3, wherein the sinking (98, 122, 148, 168) comprises a central hole (100, 150).

5. The spring brake actuator of claim 3 or 4, wherein the embossing (106, 146) surrounds the sinking (98, 148) by at least 360°.

6. The spring brake actuator of one of the preceding claims, wherein the embossing (106) has a form of a spiral corresponding with the second end (96) of the compression spring (82), when the compression spring (82) is in a compressed state.

7. The spring brake actuator of one of claims 1 to 5, wherein the embossing (106) matches a shape of the second end (96) of the compression spring (82), when the compression spring (82) is in a compressed state.

8. The spring brake actuator of one of claims 1 to 5, wherein the embossing (146) includes a smaller part (152) and a larger part (154) and comprises an area having a size being sufficient to include an outer contour of the second end (96), when the compression spring (82) is in a compressed state.

9. The spring brake actuator of claim 8, wherein the embossing (146) has a form of a trench, and wherein the smaller part (152) has a smaller width with regard to a width of the larger part (154).

10. The spring brake actuator of one of the preceding claims, comprising a spring seat (104, 160) disposed at the housing bottom (74, 142), wherein the spring seat (104, 160) comprises an embossing (106', 168) corresponding with the embossing (106, 146) of the housing bottom (74, 142).

11. The spring brake actuator of claim 10, wherein the compression spring (82) rests with the second end (96) at the embossing (106', 168) of the spring seat (104, 160).

12. The spring brake actuator of one of the preceding claims, wherein the ram assembly (78, 86) comprises a spring brake piston (78) or a second diaphragm.

13. The spring brake actuator of one of the preceding claims, wherein the brake actuator is a component of a compressed air brake system of a commercial vehicle.

14. A commercial vehicle comprising a brake actuator (1) according to one of the preceding claims.
